# EUROPEAN PATENT APPLICATION

(11) **EP 3 352 269 A1**
(43) Date of publication of application: **25.07.2018**
(21) Application number: 16846386.7
(22) Date of filing: 09.09.2016
(51) Int. Cl.: H01M 4/86, H01M 4/88, H01M 4/96, H01M 8/10

(54) **GAS DIFFUSION ELECTRODE AND METHOD FOR PRODUCING SAME**

(30) Priority: 18.09.2015 JP 2015184816
(71) Applicant: Toray Industries, Inc., Tokyo 103-8666 (JP)
(72) Inventor: HASHIMOTO, Masaru, Otsu-shi Shiga 520-2141 (JP); WAKATABE, Michio, Otsu-shi Shiga 520-2141 (JP); KATO, Sho, Otsu-shi Shiga 520-2141 (JP)
(74) Representative: Prüfer & Partner mbB Patentanwälte · Rechtsanwälte
(86) International application number: PCT/JP2016/076603
(87) International publication number: WO 2017/047515

(57) **Abstract**

An object of the present invention is to provide a gas diffusion layer for a fuel cell that is balanced between performance and durability. The present invention provides a gas diffusion electrode having a microporous layer, wherein the microporous layer has at least a first microporous layer and a second microporous layer, the first microporous layer has a cross-sectional F/C ratio of 0.06 or more and 0.33 or less, the second microporous layer has a cross-sectional F/C ratio less than 0.06, and where the first microporous layer is equally divided into a part not in contact with the second microporous layer and a part in contact with the second microporous layer, in the equally divided first microporous layer, the part not in contact with the second microporous layer is referred to as a microporous layer 1-1, the part in contact with the second microporous layer is referred to as a microporous layer 1-2, and the microporous layer 1-1 has a cross-sectional F/C ratio smaller than that of the microporous layer 1-2, wherein "F" is the mass of fluorine atoms, "C" is the mass of carbon atoms, and the "cross-sectional F/C ratio" is the value of "mass of fluorine atoms"/"mass of carbon atoms" as measured in the cross-sectional direction.

## Description

### TECHNICAL FIELD

A fuel cell is a mechanism for electrically extracting energy generated when hydrogen is allowed to react with oxygen to produce water, and is expected to be widely used as clean energy because of its high energy efficiency and the fact that it discharges only water. The present invention relates to a gas diffusion electrode used in a fuel cell, and more particularly to a gas diffusion electrode used in, among fuel cells, a polymer electrolyte fuel cell used as a power source for a fuel cell vehicle and the like.

### BACKGROUND ART

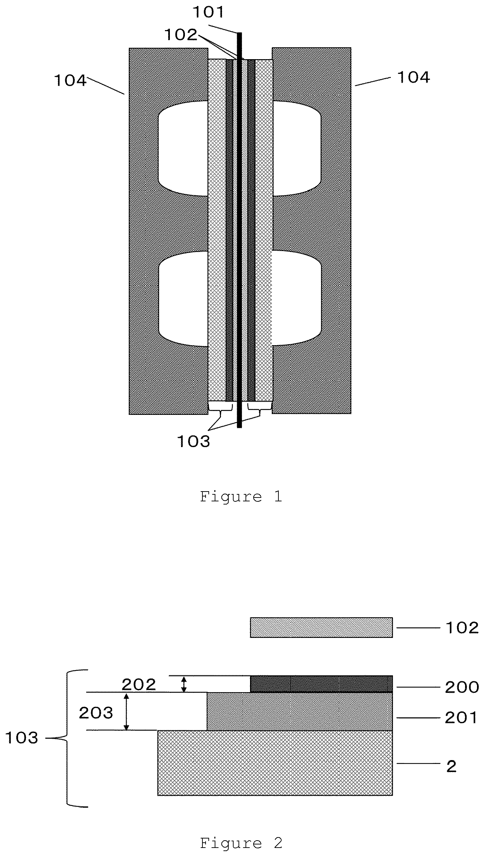

As shown in Fig. 1, an electrode used in a polymer electrolyte fuel cell is sandwiched between two separators 104 and disposed therebetween in the polymer electrolyte fuel cell, and has a structure including a polymer electrolyte membrane 101, catalyst layers 102 formed on both surfaces of the polymer electrolyte membrane, and gas diffusion layers 103 formed outside the catalyst layers.

A gas diffusion electrode is distributed as an individual member for forming the gas diffusion layer in the electrode. As the performance required of the gas diffusion electrode, for example, there are gas diffusibility, electrical conductivity for collecting electricity generated in the catalyst layer, and water drainability for efficiently removing moisture generated on the surface of the catalyst layer. In order to obtain such a gas diffusion electrode, generally, a conductive porous substrate having both gas diffusion ability and electrical conductivity is used.

Specific examples of the conductive porous substrate include carbon felt, carbon paper, and carbon cloth made of carbon fibers. Among them, carbon paper is most preferable from the viewpoint of mechanical strength and the like.

Since the fuel cell is a system for electrically extracting energy generated when hydrogen is allowed to react with oxygen to produce water, under an increased electrical load, that is, under a large current taken out to the outside of the cell, a large amount of water (water vapor) is produced. The water vapor condenses into water droplets at low temperature to block the pores of the gas diffusion electrode, and thus reduces the amount of gas (oxygen or hydrogen) supplied to the catalyst layer. If all the pores are finally blocked, power generation may stop (this phenomenon is called flooding).

In order to prevent the occurrence of flooding as much as possible, water drainability is required of the gas diffusion electrode. As a means for improving the water drainability, a conductive porous substrate subjected to a water repellent treatment is usually used to improve the water repellency.

In addition, when the conductive porous substrate subjected to the water repellent treatment as described above is used as a gas diffusion electrode as it is, condensation of water vapor generates large water droplets and tends to cause flooding, since the fibers of the conductive porous substrate are coarsely woven. Therefore, a layer called a microporous layer is sometimes provided on the conductive porous substrate having been subjected to the water repellent treatment by applying a coating solution in which conductive fine particles such as carbon black and a water repellent resin are dispersed, followed by drying and sintering. In addition to the above, the microporous layer has the functions of preventing penetration of the catalyst layer into the coarse conductive porous substrate, reducing the contact resistance with the catalyst layer, and preventing the physical damage to the electrolyte membrane due to transfer of the coarse conductive porous substrate to the electrolyte membrane.

In order to further reduce the contact resistance with the catalyst layer, and to make the gas diffusion electrode follow the change in thickness due to the swelling of the electrolyte membrane occurring at the time of power generation of the fuel cell so that the gas diffusion electrode may be balanced between the performance and durability, the catalyst layer is sometimes pressure-bonded to the microporous layer. In such a case, it is desirable that the percentage of the water repellent resin that inhibits the adhesion be small in the surface of the microporous layer.

Meanwhile, in order to prevent the flooding, that is, to achieve one of the purposes of providing the microporous layer, a certain amount of the water repellent resin is required in the microporous layer.

As a technique for improving the adhesion between the catalyst layer and the microporous layer, and a conventional technique in which the percentage of the water repellent resin in the surface of the microporous layer is reduced and the percentage of the water repellent resin inside the microporous layer is increased, techniques disclosed in Patent Documents 1 to 3 have been proposed.

### PRIOR ART DOCUMENTS

### PATENT DOCUMENTS

Patent Document 1: Japanese Patent Laid-open Publication No. 2010-049933
Patent Document 2: International Publication No. 2013-161971
Patent Document 3: Japanese Patent No. 5696722

### SUMMARY OF THE INVENTION

### PROBLEMS TO BE SOLVED BY THE INVENTION

In the technique disclosed in Patent Document 1, in order to increase the adhesive strength between the catalyst layer and the microporous layer, an adhesive powder is scattered on the surface of one of the catalyst layer and the microporous layer, and the adhesive powder is softened by thermocompression bonding the two layers with each other. In this case, problems such as increase in the contact resistance, inhibition of water discharge, and deterioration of the gas diffusibility arise as compared with the case without any adhesive powder.

In the technique disclosed in Patent Document 2, in order to improve the adhesion between the microporous layer and the conductive porous substrate, the percentage of the water repellent resin in a side of the microporous layer that is in contact with the conductive porous substrate is increased. In this case, water discharge is inhibited, and flooding occurs. In addition, since the adhesion between the microporous layer and the conductive porous substrate is ensured by the water repellent resin which is an insulator, the contact resistance between the microporous layer and the conductive porous substrate increases.

In the technique disclosed in Patent Document 3, in order to obtain high power generation performance under operating conditions of low humidity or no humidity, two microporous layers, that is, a microporous layer in contact with a gas diffusion electrode and a microporous layer in contact with a catalyst layer are provided, and the percentage of the water repellent resin in the layer in contact with the catalyst layer is set lower than that in the layer in contact with the gas diffusion electrode. However, in this document, the percentage of the water repellent resin in the microporous layers is high, and the gas diffusibility is deteriorated because the water repellent resin blocks the pores in the microporous layers.

### SOLUTIONS TO THE PROBLEMS

In order to solve the above-mentioned problems, the present invention employs the following means.

A gas diffusion electrode having a microporous layer,
wherein the microporous layer has at least a first microporous layer and a second microporous layer,
the first microporous layer has a cross-sectional F/C ratio of 0.06 or more and 0.33 or less,
the second microporous layer has a cross-sectional F/C ratio less than 0.06, and
where the first microporous layer is equally divided into a part not in contact with the second microporous layer and a part in contact with the second microporous layer, in the equally divided first microporous layer, the part not in contact with the second microporous layer is referred to as a microporous layer 1-1, the part in contact with the second microporous layer is referred to as a microporous layer 1-2, and the microporous layer 1-1 has a cross-sectional F/C ratio smaller than that of the microporous layer 1-2,
wherein "F" is the mass of fluorine atoms, "C" is the mass of carbon atoms, and the "cross-sectional F/C ratio" is the value of "mass of fluorine atoms"/"mass of carbon atoms" as measured in the cross-sectional direction.

### EFFECTS OF THE INVENTION

The gas diffusion electrode of the present invention includes a microporous layer having high adhesion to the catalyst layer while having high gas diffusibility and high electrical conductivity, and use of the gas diffusion electrode makes it possible to balance between the performance and durability.

### BRIEF DESCRIPTION OF THE DRAWINGS

Fig. 1 is a cross-sectional view of one cell (single cell) of a polymer electrolyte fuel cell.
Fig. 2 is a schematic view showing a configuration of a gas diffusion electrode of the present invention.

### EMBODIMENTS OF THE INVENTION

The gas diffusion electrode of the present invention is a gas diffusion electrode having a microporous layer, wherein the microporous layer has at least a first microporous layer and a second microporous layer, the first microporous layer has a cross-sectional F/C ratio of 0.06 or more and 0.33 or less, the second microporous layer has a cross-sectional F/C ratio less than 0.06, and where the first microporous layer is equally divided into a part not in contact with the second microporous layer and a part in contact with the second microporous layer, in the equally divided first microporous layer, the part not in contact with the second microporous layer is referred to as a microporous layer 1-1, the part in contact with the second microporous layer is referred to as a microporous layer 1-2, and the microporous layer 1-1 has a cross-sectional F/C ratio smaller than that of the microporous layer 1-2, wherein "F" is the mass of fluorine atoms, "C" is the mass of carbon atoms, and the "cross-sectional F/C ratio" is the value of "mass of fluorine atoms"/"mass of carbon atoms" as measured in the cross-sectional direction.

As for the gas diffusion electrode of the present invention, first, the conductive porous substrate will be described.

In a polymer electrolyte fuel cell, the gas diffusion electrode is required to have high gas diffusibility for diffusing a gas supplied from a separator to a catalyst, high water drainability for discharging water produced by an electrochemical reaction to the separator, and high electrical conductivity for extracting the generated current. Therefore, for the gas diffusion electrode, it is preferable to use a conductive porous substrate, which is a substrate made of a porous material having electrical conductivity and usually having a pore diameter in the region of 10 µm or more and 100 µm or less. In the gas diffusion electrode of the present invention according to an aspect in which the gas diffusion electrode includes the conductive porous substrate, it is preferable that the gas diffusion electrode include the conductive porous substrate and the microporous layer on at least one surface of the conductive porous substrate, and have the first microporous layer on at least one surface of the conductive porous substrate.

Preferable specific examples of the conductive porous substrate include porous substrates containing carbon fibers, such as a carbon fiber woven fabric, a carbon fiber paper sheet, a carbon fiber nonwoven fabric, carbon felt, carbon paper, and carbon cloth, and metal porous substrates such as a foamed sintered metal, a metal mesh, and an expanded metal. Among these, conductive porous substrates containing carbon fibers, such as carbon felt, carbon paper, and carbon cloth are preferable from the viewpoint of their excellent corrosion resistance. Furthermore, in view of being excellent in the property of absorbing dimensional change of the electrolyte membrane in the through-plane direction, that is, the "spring property", a substrate obtained by bonding a carbon fiber paper sheet with a carbide, that is, carbon paper is suitably used.

In the present invention, a conductive porous substrate subjected to a water repellent treatment by the addition of a fluororesin is suitably used. Since a fluororesin acts as a water repellent resin, the conductive porous substrate used in the present invention preferably contains a water repellent resin such as a fluororesin. Examples of the water repellent resin contained in the conductive porous substrate, that is, the fluororesin contained in the conductive porous substrate include PTFE (polytetrafluoroethylene) (for example, "Teflon" (registered trademark)), FEP (an ethylene tetrafluoride-propylene hexafluoride copolymer), PFA (a perfluoroalkoxy fluoride resin), ETFA (an ethylene-tetrafluoroethylene copolymer), PVDF (polyvinylidene fluoride), and PVF (polyvinyl fluoride) . PTFE or FEP which exhibits strong water repellency is preferable.

The amount of the water repellent resin is not particularly limited. The amount of the water repellent resin is suitably about 0.1% by mass or more and 20% by mass or less in 100% by mass in total of the conductive porous substrate. If the amount of the water repellent resin is less than 0.1% by mass, the water repellency may not be sufficiently exhibited. If the amount of the water repellent resin exceeds 20% by mass, the pores which serve as gas diffusion paths or water drainage paths may be blocked, or the electric resistance may be increased.

A method of subjecting the conductive porous substrate to a water repellent treatment may be a coating technique of applying a water repellent resin to the conductive porous substrate by die coating, spray coating, or the like, in addition to a generally known treatment technique of immersing the conductive porous substrate in a dispersion containing a water repellent resin. Further, processing by a dry process such as sputtering of a fluororesin can also be applied. After the water repellent treatment, if necessary, a drying step or a sintering step may be added.

Then, the microporous layer will be described. The gas diffusion electrode of the present invention has a microporous layer. The microporous layer has at least a first microporous layer and a second microporous layer. In addition, the gas diffusion electrode may be formed only with the microporous layer. As described above, in a suitable aspect, the gas diffusion electrode includes a conductive porous substrate and the microporous layer on at least one surface of the conductive porous substrate, and has the first microporous layer on at least one surface of the conductive porous substrate. The microporous layer is not particularly limited as long as it has at least two layers. In a more preferable aspect, the second microporous layer is disposed at the outermost layer of the microporous layer. In a particularly preferable aspect, the microporous layer has a two-layer structure of a first microporous layer in contact with the conductive porous substrate and a second microporous layer in contact with the first microporous layer and in the outermost layer.

First, the first microporous layer will be described. In a gas diffusion electrode having a conductive porous substrate, the first microporous layer is a layer in contact with the conductive porous substrate, and has a plurality of pores.

The first microporous layer preferably contains conductive fine particles. It is only required that the first microporous layer contain conductive fine particles, and the particle diameter of the conductive fine particles is not particularly limited. It is preferable that the conductive fine particles in the first microporous layer have a particle diameter of 3 nm or more and 500 nm or less. If the particle diameter is less than 3 nm, the first microporous layer has a low porosity, and may have low gas diffusibility. On the other hand, if the particle diameter is more than 500 nm, the number of conductive paths in the first microporous layer decreases, and the electric resistance may increase. In the present invention, it is more preferable that the conductive fine particles in the first microporous layer have a particle diameter of 20 nm or more and 200 nm or less.

Herein, the particle diameter of the conductive fine particles refers to the particle diameter obtained using a transmission electron microscope. The particle diameter of the conductive fine particles is obtained by observing the conductive fine particles with a transmission electron microscope at a measurement magnification of 500,000 times, measuring the outer diameters of 100 particles present in the screen, and calculating the average of the outer diameters. Herein, the outer diameter refers to the maximum diameter of the particle (that is, the long diameter of the particle, which indicates the longest diameter of the particle). As a transmission electron microscope, JEM-4000 EX manufactured by JEOL Ltd. or a similar product can be used.

In the present invention, examples of the conductive fine particles include carbon black as a "granular conductive material", carbon nanotubes, carbon nanofibers, and chopped carbon fibers as a "conductive material having a linear portion", and graphene and graphite as a "scaly conductive material". Among them, the "granular conductive material" is preferable as the conductive fine particles contained in the first microporous layer. Carbon black is particularly suitably used from the viewpoint of its low cost, safety, and stability of the product quality. That is, in the present invention, it is preferable that the first microporous layer contain carbon black. As carbon black, acetylene black is suitably used from the viewpoint that it contains slight amount of impurities and hardly lowers the activity of the catalyst.

In addition, the ash content can be mentioned as a measure of the content of impurities in carbon black. It is preferable to use carbon black having an ash content of 0.1% by mass or less. The ash content in carbon black is preferably as low as possible. Carbon black having an ash content of 0% by mass, that is, carbon black containing no ash is particularly preferable.

In addition, the first microporous layer is required to have properties such as electrical conductivity, gas diffusibility, water drainability, moisture retention, and thermal conductivity, as well as resistance to strong acids on the anode side and oxidation resistance on the cathode side inside a fuel cell. Therefore, in addition to the conductive fine particles, the first microporous layer preferably contains a water repellent resin such as a fluororesin. As the fluororesin contained in the first microporous layer and the second microporous layer, PTFE, FEP, PFA, ETFA and the like can be mentioned similarly to the case of the fluororesin suitably used for subjecting the conductive porous substrate to a water repellent treatment. PTFE or FEP is preferable from the viewpoint of particularly high water repellency.

As for the amount of the water repellent resin in the first microporous layer, the first microporous layer has a cross-sectional F/C ratio of 0.06 or more and 0.33 or less. If the cross-sectional F/C ratio is less than 0.06, the first microporous layer may be insufficient in the water repellency and lowered in the water drainability. If the cross-sectional F/C ratio exceeds 0.33, the water repellent resin blocks the pores in the first microporous layer, and the gas diffusibility is deteriorated. More preferably, the first microporous layer has a cross-sectional F/C ratio of 0.08 or more and 0.20 or less. Herein, "F" is the mass of fluorine atoms, "C" is the mass of carbon atoms, and the "cross-sectional F/C ratio" is the value of "mass of fluorine atoms"/"mass of carbon atoms" as measured in the cross-sectional direction.

In order to secure the water drainability of the microporous layer and prevent the flooding, where the first microporous layer of the present invention is equally divided into a part not in contact with the second microporous layer and a part in contact with the second microporous layer, in the equally divided first microporous layer, the part not in contact with the second microporous layer is referred to as a microporous layer 1-1, the part in contact with the second microporous layer is referred to as a microporous layer 1-2, and it is preferable that the microporous layer 1-1 have a cross-sectional F/C ratio smaller than that of the microporous layer 1-2.

A method for making the cross-sectional F/C ratio of the microporous layer 1-1 smaller than that of the microporous layer 1-2 is not particularly limited. For example, the cross-sectional F/C ratio of the microporous layer 1-1 can be made smaller than that of the microporous layer 1-2 by performing a heat treatment in a state where the first microporous layer is in contact with the conductive porous substrate to move the water repellent resin in the first microporous layer toward the microporous layer 1-2 side by migration.

Then, the second microporous layer will be described. The second microporous layer is a layer in contact with the first microporous layer. In a gas diffusion electrode according to an aspect in which the gas diffusion electrode includes the conductive porous substrate, when viewed from the conductive porous substrate side in the gas diffusion electrode, the second microporous layer is present outside the first microporous layer, and has a plurality of pores. The second microporous layer is particularly preferably disposed at the outermost layer of the microporous layer.

The second microporous layer preferably contains conductive fine particles. The conductive fine particles contained in the second microporous layer are preferably a "conductive material having a linear portion".

Herein, a "linear" shape means an elongated shape like a line, more specifically, a shape having an aspect ratio of 10 or more. Therefore, "having a linear portion" means to have a portion having an aspect ratio of 10 or more.

The conductive material having a linear portion in the second microporous layer is desirably a conductive material having a linear portion having an aspect ratio of 30 or more and 5000 or less. If the aspect ratio of the linear portion is less than 30, the entanglement of the conductive material in the microporous layer decreases, and cracks may be formed in the second microporous layer. On the other hand, if the aspect ratio of the linear portion is more than 5000, the entanglement of the conductive material in the second microporous layer is excessive, the solid matters aggregate in the second microporous layer, and the surface of the second microporous layer may be roughened. In the present invention, the conductive material having a linear portion in the second microporous layer more preferably has a linear portion having an aspect ratio of 35 or more and 3000 or less, still more preferably has a linear portion having an aspect ratio of 40 or more and 1000 or less.

Herein, the aspect ratio of the linear portion of the conductive material is obtained in the following manner. The aspect ratio means average length (µm) /average diameter (µm). The average length is obtained by photographing the conductive material with a microscope such as a scanning electron microscope or a transmission electron microscope at an enlargement magnification of 1000 times or more, randomly selecting 10 different linear portions, measuring the lengths of the linear portions, and obtaining the average of the lengths. The average diameter is obtained by photographing the 10 linear portions, which are randomly selected for the purpose of obtaining the average length, with a microscope such as a scanning electron microscope or a transmission electron microscope at an enlargement magnification of 10000 times or more, measuring the diameters of the 10 linear portions, and obtaining the average of the diameters. As the scanning electron microscope, SU8010 manufactured by Hitachi High-Technologies Corporation, Ltd. or a similar product can be used.

In the present invention, examples of the conductive material having a linear portion include linear carbon, titanium oxide, and zinc oxide. The conductive material having a linear portion is preferably linear carbon, and examples of the linear carbon include vapor-grown carbon fibers (VGCF), carbon nanotubes, carbon nanohorns, carbon nanocoils, cup stacked carbon nanotubes, bamboo-shaped carbon nanotubes, graphite nanofibers, and chopped carbon fibers. Among them, VGCF is suitably used as the conductive material having a linear portion, since the linear portion can have a large aspect ratio and VGCF is excellent in electrical conductivity and mechanical properties. That is, in the present invention, it is preferable that the second microporous layer contain VGCF.

In order to improve the adhesion to the catalyst layer and reduce the contact resistance with the catalyst layer, it is preferable that the surface of the second microporous layer that is in contact with the catalyst layer contain a small amount of the water repellent resin.

As for the amount of the water repellent resin in the second microporous layer, the second microporous layer has a cross-sectional F/C ratio less than 0.06. If the cross-sectional F/C ratio is 0.06 or more, the second microporous layer cannot adhere to the catalyst layer, and the electric resistance may increase. The cross-sectional F/C ratio is more preferably less than 0.03.

In order to produce the gas diffusion electrode of the present invention having a conductive porous substrate, generally, a coating solution intended for forming a microporous layer, that is, a coating solution for forming a microporous layer (hereinafter referred to as a "microporous layer coating solution") is applied to the conductive porous substrate. The microporous layer coating solution usually contains the conductive fine particles and the conductive material having a linear portion as described above, and a dispersion medium such as water and an alcohol. In many cases, the microporous layer coating solution contains a surfactant or the like as a dispersant for dispersing the conductive fine particles and the conductive material having a linear portion. When a water repellent resin is incorporated into the microporous layer, it is preferable to previously add a water repellent resin to the microporous layer coating solution.

The microporous layer has the functions of: (1) an effect of preventing condensation of water vapor produced at the cathode; (2) prevention of penetration of the catalyst layer into the coarse conductive porous substrate; (3) reduction of the contact resistance with the catalyst layer; and (4) an effect of preventing the physical damage to the electrolyte membrane due to transfer of the coarse conductive porous substrate to the electrolyte membrane.

As described above, the microporous layer coating solution is prepared by dispersing the conductive fine particles or the conductive material having a linear portion using a dispersant. In order to disperse the conductive fine particles or the conductive material having a linear portion, it is preferable to add the dispersant in an amount of 0.1% by mass or more and 5% by mass or less based on 100% by mass of the total content of the conductive fine particles or the conductive material having a linear portion and the dispersant. It is effective to increase the amount of the dispersant added in order to stabilize the dispersion for a long period of time to prevent the viscosity increase of the coating solution, and to prevent separation of the solution.

Further, in order to prevent the microporous layer coating solution from flowing into the pores of the conductive porous substrate to bleed through the conductive porous substrate, it is preferable that the microporous layer coating solution maintain a viscosity of at least 1000 mPa·s. Conversely, if the microporous layer coating solution has too high a viscosity, the coatability is deteriorated. Thus, the upper limit of the viscosity is about 25 Pa·s. A preferable viscosity range is 3000 mPa·s or more and 20 Pa·s or less, and a more preferable viscosity range is 5000 mPa·s or more and 15 Pa·s or less. In the present invention, after the first microporous layer is formed, the second microporous layer coating solution is applied to the first microporous layer to form a second microporous layer. In this process, the viscosity of the second microporous layer coating solution is lower than the above-mentioned viscosity, and is desirably 10 Pa·s or less.

In order to maintain the high viscosity of the microporous layer coating solution as described above, it is effective to add a thickener. The thickener used herein may be a generally well-known thickener. For example, a methylcellulose thickener, a polyethylene glycol thickener, or a polyvinyl alcohol thickener is suitably used.

For the dispersant and the thickener, a single substance having two functions may be used, or materials suitable for the respective functions may be selected. If the thickener and the dispersant are separately selected, it is preferable to select those that do not destroy a dispersion system of the conductive fine particles and a dispersion system of the fluororesin as the water repellent resin. Herein, the dispersant and the thickener are collectively referred to as surfactants. In the present invention, the total amount of the surfactants is preferably 50 parts by mass or more, more preferably 100 parts by mass or more, still more preferably 200 parts by mass or more based on the mass of the added conductive fine particles or conductive material having a linear portion. The upper limit of the addition amount of the surfactants is usually 500 parts by mass or less based on the mass of the added conductive fine particles or conductive material having a linear portion. If the addition amount exceeds the upper limit, a large amount of vapor or cracked gas will be generated in the subsequent sintering step, which may impair the safety and productivity.

The microporous layer coating solution can be applied to the conductive porous substrate using a variety of commercially available coating apparatuses. As the coating method, for example, screen printing, rotary screen printing, spraying, intaglio printing, gravure printing, die coating, bar coating, blade coating, or comma coating can be employed. Die coating is preferable because the application amount can be quantified irrespective of the surface roughness of the conductive porous substrate. The above-mentioned coating methods are presented solely for the illustration purpose, and the coating method is not necessarily limited thereto.

After the application of the microporous layer coating solution, if necessary, the dispersion medium (in the case of an aqueous system, water) of the microporous layer coating solution is removed by drying. The temperature of drying after the application is desirably from room temperature (around 20°C) to 150°C or less, more preferably 60°C or more and 120°C or less when the dispersion medium is water. The dispersion medium (for example, water) may be dried in a batch manner in the subsequent sintering step.

After the application of the microporous layer coating solution, the microporous layer coating solution is generally sintered for the purpose of removing the surfactants used in the microporous layer coating solution, and dissolving the water repellent resin once to bond the conductive fine particles and the conductive material having a linear portion.

The sintering temperature depends on the boiling point or the decomposition temperature of the surfactants added, but it is preferable to sinter the coating solution at a temperature of 250°C or more and 400°C or less. If the sintering temperature is less than 250°C, the surfactants cannot be sufficiently removed, or it takes a great deal of time to completely remove the surfactants, whereas if the sintering temperature exceeds 400°C, the water repellent resin may be decomposed.

From the viewpoint of productivity, the sintering time is as short as possible, and is preferably within 20 minutes, more preferably within 10 minutes, still more preferably within 5 minutes. If the microporous layer coating solution is sintered in too short a time, vapor and decomposition products of the surfactants are abruptly generated. If the microporous layer coating solution is sintered in the air, the coating solution may be ignited.

The optimum temperature and time for the sintering are selected in consideration of the melting point or decomposition temperature of the water repellent resin, and the decomposition temperature of the surfactants. Drying and sintering may be carried out both after the application of the first microporous layer coating solution and after the application of the second microporous layer coating solution. As will be described later, it is preferable to carry out drying and sintering in a batch manner after the application of the first microporous layer coating solution and the application of the second microporous layer coating solution.

In the case of forming a gas diffusion electrode only with a microporous layer, a gas diffusion electrode that does not include a conductive porous substrate can be obtained by applying a microporous layer coating solution to a film in place of a conductive porous substrate, forming a microporous layer by the above-mentioned method, and peeling the microporous layer off the film.

The microporous layer will be described in more detail with reference to Fig. 2. Note that a suitable method for producing the gas diffusion electrode of the present invention includes the steps of: applying a coating solution for forming a first microporous layer to one surface of a conductive porous substrate, and then applying a coating solution for forming a second microporous layer to the first microporous layer.

A first microporous layer 201 of the present invention is formed by directly applying a coating solution for forming the first microporous layer (hereinafter referred to as a "first microporous layer coating solution") to a conductive porous substrate 2.

As for a thickness 203 of the first microporous layer of the present invention, it is preferable that the total thickness of the microporous layer be 10 µm or more in order to obtain the effect of preventing the physical damage to the electrolyte membrane due to transfer of the coarse conductive porous substrate to the electrolyte membrane. More preferably, the thickness of the first microporous layer alone is 9. 9 µm or more, still more preferably 10 µm or more. The thickness of the first microporous layer, however, is preferably less than 50 µm because it is necessary to ensure gas diffusibility even when the second microporous layer is laminated on the first microporous layer.

A second microporous layer 200 of the present invention is formed by applying a coating solution for forming the second microporous layer (hereinafter referred to as a "second microporous layer coating solution") to the outside of the first microporous layer 201 when viewed from the conductive porous substrate 2 side. On a surface of the second microporous layer, a catalyst layer 102 is disposed. When the microporous layer consists only of two layers of the first microporous layer 201 and the second microporous layer 200, the second microporous layer coating solution is applied to the surface of the first microporous layer 201. The second microporous layer 200 has the functions of preventing penetration of the catalyst layer into the coarse conductive porous substrate, reducing the contact resistance with the catalyst layer, and improving the adhesion to the catalyst layer.

The second microporous layer of the present invention has a cross-sectional F/C ratio less than 0.06, and thus the adhesion between the second microporous layer and the catalyst layer can be improved. The second microporous layer particularly preferably has a cross-sectional F/C ratio less than 0.03.

Furthermore, in order for the second microporous layer to have the effect of preventing penetration of the catalyst layer and reducing the contact resistance with the catalyst layer, a thickness 202 of the second microporous layer is preferably 0.1 µm or more and less than 10 µm. If the thickness of the second microporous layer is less than 0.1 µm, the second microporous layer does not completely cover the surface of the first microporous layer, so that the water repellent resin present in the first microporous layer may appear on the surface of the microporous layer, and the adhesion between the catalyst layer and the microporous layer may be deteriorated. On the other hand, if the thickness of the second microporous layer is 10 µm or more, gas diffusibility may be deteriorated. The thickness of the second microporous layer is preferably 7 µm or less, more preferably 5 µm or less.

The thicknesses of the gas diffusion electrode and the conductive porous substrate can be measured with a micrometer or the like while applying a load of 0.15 MPa to the substrate. The thickness of the microporous layer can be obtained by subtracting the thickness of the conductive porous substrate from the thickness of the gas diffusion electrode. Furthermore, as for the case where the microporous layer has a two-layer structure, the thickness of the second microporous layer can be determined at the time of application of the second microporous layer to the first microporous layer applied to the conductive porous substrate by obtaining the difference between the thickness of the portion having the second microporous layer and the thickness of the portion not having the second microporous layer as shown in Fig. 2. For the adjustment of the thicknesses of the first microporous layer and the second microporous layer formed by coating on the substrate, the above-mentioned measurement method with a micrometer is employed.

In the case of obtaining the thicknesses of the conductive porous substrate, the first microporous layer, and the second microporous layer in the gas diffusion electrode including these layers, the following method can be employed: cutting the gas diffusion electrode in the through-plane direction using an ion milling apparatus such as IM4000 manufactured by Hitachi High-Technologies Corporation, observing the cross section of the gas diffusion electrode perpendicular to the electrode (cross section in the through-plane direction) with a scanning electron microscope (SEM) to obtain a SEM image, and calculating the thicknesses from the SEM image.

The gas diffusion electrode of the present invention preferably has a gas diffusibility in the through-plane direction of 30% or more, more preferably 32% or more in order to secure power generation performance. The gas diffusibility in the through-plane direction is preferably as high as possible . The upper limit of the gas diffusibility, however, is thought to be about 40% in order for a fuel cell incorporating the gas diffusion electrode to maintain its structure even when a pressure is applied to the inside of the fuel cell having too large a pore volume.

The gas diffusion electrode of the present invention preferably has, when pressurized at 2.4 MPa, an electric resistance in the through-plane direction of 4.0 mΩcm² or less in order to secure power generation performance. The electric resistance in the through-plane direction is preferably as small as possible. It is actually not easy to set the electric resistance when the gas diffusion electrode is pressurized at 2.4 MPa to less than 0.5 mΩcm². Thus, the lower limit of the electric resistance when the gas diffusion electrode is pressurized at 2.4 MPa is about 0.5 mΩcm².

In the present invention, the method preferably includes the steps of: applying a first microporous layer coating solution to one surface of the conductive porous substrate, and then applying a second microporous layer coating solution to the first microporous layer so that the second microporous layer may have a thickness less than 10 µm. In order to uniformly apply such a thin film, it is effective to employ a wet on wet multilayer technique of applying the first microporous layer coating solution to the conductive porous substrate, and then successively applying the second microporous layer coating solution without drying the first microporous layer coating solution. The surface of the conductive porous substrate is generally coarse, and the irregularities sometimes have a difference in height almost 10 µm. If the first microporous layer coating solution is applied to such surface having large irregularities, the irregularities cannot be completely eliminated after drying. Since the second microporous layer is suitably a thin film having a thickness less than 10 µm, the second microporous layer coating solution preferably has a somewhat low viscosity. When an attempt is made to form a thin film on the surface having irregularities as described above with such a low-viscosity coating solution, the solution tends to stand in the concave portions of the irregularities (that is, a thick film is formed) and does not accumulate on the convex portions, and in an extreme case, a thin film of the second microporous layer cannot be formed. In order to prevent such a problem, prior to drying the first microporous layer coating solution, the second microporous layer coating solution is overlaid on the first microporous layer coating solution, and then the solutions are batch-dried. In this case, a thin film of the second microporous layer can be uniformly formed on the surface of the first microporous layer.

In the multilayer coating, batch drying of the applied layers after completion of the multilayer coating rather than separate drying after each time the layers are applied as described above requires only one dryer, and shortens the coating step, so that the equipment cost and production space can be reduced. In addition, since the process is shortened, it is also possible to reduce the loss of the generally expensive conductive porous substrate in the process.

In the above-mentioned multilayer coating, it is possible to employ a method in which the first microporous layer coating solution is applied with a die coater, and the second microporous layer coating solution is also applied with a die coater. Further, it is also possible to employ a method in which the first microporous layer coating solution is applied with a roll coater of various types, and the second microporous layer coating solution is applied with a die coater. Further, it is also possible to employ a method in which the first microporous layer coating solution is applied with a comma coater, and the second microporous layer coating solution is applied with a die coater. In addition, it is also possible to employ a method in which the first microporous layer coating solution is applied with a lip coater, and the second microporous layer coating solution is applied with a die coater. Alternatively, it is also possible to employ a method in which the first microporous layer coating solution and the second microporous layer coating solution are overlaid on each other using a slide die coater prior to the application to the substrate. It is particularly preferable for the uniform application of a high-viscosity coating solution to apply the first microporous layer coating solution with a die coater or a comma coater.

The gas diffusion electrode of the present invention is used in a fuel cell that is produced by pressure-bonding the gas diffusion electrode on both sides of an electrolyte membrane having a catalyst layer on both sides so that each catalyst layer may come into contact with each gas diffusion electrode, and further incorporating a member such as a separator into the resultant to form a single cell. In this case, it is advisable to assemble the fuel cell so that the second microporous layer may come into contact with the catalyst layer.

### EXAMPLES

Hereinafter, the present invention will be concretely described by way of examples. The materials used in the examples, the method for producing the conductive porous substrate, and the method for evaluating the battery performance of the fuel cell are shown below.

### <Materials>

### A: Conductive porous substrate

### • Carbon paper piece having a thickness of 150 µm and a porosity of 85%:

The carbon paper piece was prepared in the following manner.

The following papermaking step was carried out: a polyacrylonitrile-based carbon fiber "TORAYCA (registered trademark)" T300-6K (average monofilament diameter: 7 µm, number of monofilaments: 6,000) manufactured by Toray Industries, Inc. was cut into a length of 6 mm, and continuously subjected to papermaking together with leaf bleached kraft pulp (LBKP) kraft market pulp (hardwood) manufactured by Alabama River Pulp Company, Inc. using water as a papermaking medium, and the resultant was immersed in a 10% by mass aqueous solution of polyvinyl alcohol and dried. The product was wound into a roll to give a long carbon fiber paper piece including short carbon fibers having an areal weight of 15 g/m². The amount of pulp added and the adhesion amount of polyvinyl alcohol corresponded to 40 parts by mass and 20 parts by mass, respectively, based on 100 parts by mass of the carbon fiber paper piece.

Scaly graphite BF-5A manufactured by Chuetsu Graphite Works Co., Ltd. (average particle diameter: 5 µm, aspect ratio: 15), a phenolic resin, and methanol (manufactured by NACALAI TESQUE, INC.) were mixed at a mass ratio of 2 : 3 : 25 to prepare a dispersion liquid. The carbon fiber paper piece was subjected to a resin impregnation step of continuously impregnating the carbon fiber paper piece with the dispersion liquid so that the amount of the phenolic resin impregnated into the paper piece would be 78 parts by mass based on 100 parts by mass of the short carbon fibers, and drying the carbon fiber paper piece at a temperature of 90°C for 3 minutes, and then the carbon fiber paper piece was wound into a roll to give a resin-impregnated carbon fiber paper piece. As the phenolic resin, a mixture of resol type phenolic resin KP-743K manufactured by ARAKAWA CHEMICAL INDUSTRIES, LTD. and novolak type phenolic resin "TAMANOL" (registered trademark) 759 manufactured by ARAKAWA CHEMICAL INDUSTRIES, LTD. at a mass ratio of 1 : 1 was used. The carbonization yield of the phenolic resin (a mixture of resol type phenolic resin and novolac type phenolic resin) was 43%.

Heating plates were set in a 100 t press manufactured by Kawajiri Co., Ltd so that the plates would be parallel to each other, a spacer was placed on the lower heating plate, and the resin-impregnated carbon fiber paper piece was compressed so that one position of the paper piece would be heated and pressurized for 6 minutes in total by intermittently conveying the paper piece that was vertically sandwiched between release paper while repeatedly opening and closing the press at a heating plate temperature of 170°C and a surface pressure of 0.8 MPa. The effective length of pressurization LP of the heating plate was 1,200 mm, the feed amount LF of the precursor fiber sheet in intermittent conveyance was 100 mm, and LF/LP was 0.08. That is, the compression treatment was carried out by repeating heating and pressurization for 30 seconds, opening of the mold, and feeding of the carbon fibers (100 mm), and the carbon fiber paper piece was wound into a roll.

The compressed carbon fiber paper piece as a precursor fiber sheet was introduced into a heating furnace having a maximum temperature of 2400°C kept in a nitrogen gas atmosphere. While being continuously transferred in the heating furnace, the precursor fiber sheet was subjected to a carbonization step of baking the sheet at a heating rate of about 500°C/min (400°C/min up to 650°C, and 550°C/min at a temperature exceeding 650°C), and then wound into a roll to give a carbon paper piece. The obtained carbon paper piece had a density of 0.25 g/cm³ and a porosity of 85%.

### • Carbon paper piece having a thickness of 180 µm and a porosity of 85%:

A carbon paper piece having a thickness of 180 µm and a porosity of 85% was prepared in the same manner as in the preparation of the carbon paper piece having a thickness of 150 µm and a porosity of 85% except that the areal weight of the carbon fibers and the thickness of the spacer in the compression treatment were adjusted so that the carbonized paper piece would have a thickness of 180 µm.

### B: Carbon black

### • "Denka Black" (registered trademark) (manufactured by Denka Company Limited)

### C: VGCF

### • "VGCF" (registered trademark) (manufactured by SHOWA DENKO K.K.)

### D: Water repellent resin

### • ("POLYFLON" (registered trademark) PTFE dispersion D-210C (manufactured by Daikin Industries, Ltd.)

### E: Surfactant

### • "TRITON" (registered trademark) X-114 (manufactured by Nacalai Tesque, Inc.)

### <Measurement of Cross-sectional F/C Ratios of Microporous Layer>

The cross-sectional F/C ratios of the microporous layer (the second microporous layer, the microporous layer 1-1, and the microporous layer 1-2) were measured in the following manner.

A gas diffusion electrode was placed horizontally, and sliced perpendicularly to the horizontal plane using a single blade to obtain a cross section. Using a SEM-EDX (energy dispersive fluorescent X-ray) analyzer, the enlargement magnification was adjusted so that the field of view from a portion close to one surface to a portion close to the other surface (entire field of view) may fit inside the monitor screen. Elemental analysis of the cross section of the gas diffusion electrode was carried out at an acceleration voltage of 5 KeV, a scan width of 20 µm, and a line scan interval of 50 µm. For each of the microporous layer 1-1, the microporous layer 1-2, and the second microporous layer, the X-ray dose (count rate) corresponding to the mass of fluorine atoms and the mass of carbon atoms in the cross section was quantified and the F/C ratio was determined.

Further, the cross-sectional F/C ratio of the first microporous layer was calculated by averaging the cross-sectional F/C ratio of the microporous layer 1-1 and the cross-sectional F/C ratio of the microporous layer 1-2.

As the SEM-EDX, an apparatus that includes SEM H-3000 manufactured by Hitachi High-Technologies Corporation and an energy dispersive fluorescent X-ray analyzer SEMEDEX Type-H added thereto was used.

### <Gas Diffusibility in Through-Plane Direction>

A gas water vapor permeation diffusion evaluation apparatus (MVDP-200C) manufactured by Seika corporation was used to flow a gas whose diffusibility was desired to be measured to one side (primary side) of the gas diffusion electrode, and to flow nitrogen gas to the other side (secondary side) of the gas diffusion electrode. The differential pressure between the primary side and the secondary side was controlled to around 0 Pa (0 ± 3 Pa) (that is, there was almost no gas flow due to the pressure difference, and the gas transfer phenomenon would occur only by molecular diffusion), and the gas concentration at the time when equilibrium was achieved was measured with a gas concentration meter on the secondary side. This value (%) was used as an indicator of gas diffusibility in the through-plane direction.

### <Electric Resistance in Through-Plane Direction>

A gas diffusion electrode was cut into a size of 40 mm × 40 mm, vertically sandwiched with flat gold-plated rigid metal electrodes, and an average pressure of 2.4 MPa was applied to the gas diffusion electrode. In this state, a current of 1 A was applied to the upper and lower electrodes, and the voltage of the electrodes was measured. In this way, the electric resistance per unit area was calculated, and this value was used as an indicator of electric resistance.

### <Evaluation of Adhesion between Catalyst Layer and Microporous Layer>

A gas diffusion electrode was overlaid on an electrolyte membrane/catalyst layer integrated product (electrolyte membrane "Gore Select (registered trademark)" manufactured by W. L. Gore & Associates, Co., LTD. and catalyst layers "PRIMEA (registered trademark)" manufactured by W. L. Gore & Associates, Co., LTD. formed on both surfaces of the electrolyte membrane) so that one of the catalyst layers would come into contact with the microporous layer, and the laminate was hot-pressed at 100°C at a pressure of 2 MPa. Whether the gas diffusion electrode adhered to the electrolyte membrane/catalyst layer integrated product or not was evaluated.

### <Power Generation Performance Evaluation>

A gas diffusion electrode was disposed on each side of the electrolyte membrane/catalyst layer integrated product so that each catalyst layer would come into contact with each microporous layer, and the laminate was hot-pressed at 100°C at a pressure of 2 MPa to prepare a membrane electrode assembly (MEA). The membrane electrode assembly was incorporated into a single cell for a fuel cell, and humidified for power generation so that the cell temperature would be 57°C, the fuel utilization efficiency would be 70%, the air utilization efficiency would be 40%, and the dew points of hydrogen on the anode and the air on the cathode were each 57°C. The output voltage when the current density was 1.9 A/cm² was used as an indicator of the anti-flooding property.

### <Evaluation of Spring Property>

A gas diffusion electrode was cut into a size of 40 mm × 40 mm, and sandwiched with rigid metal bodies having a flat surface. The compression rate of the gas diffusion electrode when an average pressure of 2.0 MPa was applied relative to the thickness of the gas diffusion electrode when an average pressure of 1.0 MPa was applied was used as an indicator of the spring property.

### (Example 1)

A carbon paper piece having a thickness of 150 µm and a porosity of 85% was immersed in a water repellent resin dispersion containing a water repellent resin dispersed in water at a concentration of 2% by mass filled in an immersion tank for a water repellent treatment. The carbon paper piece was dried at 100°C to give a conductive porous substrate. As the water repellent resin dispersion, PTFE dispersion D-210C diluted with water to have a PTFE concentration of 2% by mass was used.

Then, a first microporous layer coating solution was applied to the carbon paper piece with a die coater, and a second microporous layer coating solution was successively applied to the first microporous layer with a die coater. The moisture was dried at 100°C, and the laminate was sintered at 350°C to give a gas diffusion electrode.

The microporous layer coating solutions were prepared in the following manner.

First microporous layer coating solution:
The coating solution was prepared by kneading 7.1 parts by mass of carbon black, 3.9 parts by mass of a PTFE dispersion, 14.2 parts by mass of a surfactant, and 74.8 parts by mass of purified water with a planetary mixer. The coating solution had a viscosity of 7.5 Pa·s.

Second microporous layer coating solution:
The coating solution was prepared by kneading 7.1 parts by mass of VGCF, 0.6 parts by mass of a PTFE dispersion, 14.2 parts by mass of a surfactant, and 78.1 parts by mass of purified water with a planetary mixer. The kneading time in the planetary mixer was increased to twice as long as that for the first microporous layer coating solution to increase the degree of dispersion of the coating solution. The coating solution had a viscosity of 1.1 Pa·s.

At the time of application of the first microporous layer coating solution, the application amount was adjusted so that the sintered microporous layer would have an areal weight of 16 g/m². The first microporous layer had a thickness of 25 µm. Moreover, at the time of application of the second microporous layer coating solution, the application amount was adjusted so that the second microporous layer would have a thickness of 3 µm.

For the gas diffusion electrode prepared as described above, the cross-sectional F/C ratio of the microporous layer 1-1, cross-sectional F/C ratio of the microporous layer 1-2, cross-sectional F/C ratio of the second microporous layer, gas diffusibility in the through-plane direction, electric resistance, adhesion between the catalyst layer and the microporous layer, power generation performance, and spring property were measured, and the results are shown in Table 1.

### (Example 2)

A gas diffusion electrode was obtained in the same manner as in Example 1 except that the amount of the PTFE dispersion in the second microporous layer coating solution was changed to 0 parts by mass, and the amount of the purified water therein was changed to 78.7 parts by mass in Example 1.

### (Example 3)

A gas diffusion electrode was obtained in the same manner as in Example 1 except that the amount of the PTFE dispersion in the first microporous layer coating solution was changed to 3.0 parts by mass, the amount of the purified water therein was changed to 75.7 parts by mass, the amount of the PTFE dispersion in the second microporous layer coating solution was changed to 0 parts by mass, and the amount of the purified water therein was changed to 78.7 parts by mass in Example 1.

### (Example 4)

A gas diffusion electrode was obtained in the same manner as in Example 1 except that the amount of the PTFE dispersion in the first microporous layer coating solution was changed to 1.8 parts by mass, the amount of the purified water therein was changed to 76.9 parts by mass, the amount of the PTFE dispersion in the second microporous layer coating solution was changed to 0 parts by mass, and the amount of the purified water therein was changed to 78.7 parts by mass in Example 1.

### (Example 5)

A gas diffusion electrode was obtained in the same manner as in Example 1 except that the amount of the PTFE dispersion in the first microporous layer coating solution was changed to 5.9 parts by mass, the amount of the purified water therein was changed to 72.8 parts by mass, the amount of the PTFE dispersion in the second microporous layer coating solution was changed to 0 parts by mass, and the amount of the purified water therein was changed to 78.7 parts by mass in Example 1.

### (Example 6)

A gas diffusion electrode was obtained in the same manner as in Example 1 except that the application amount of the first microporous layer coating solution was adjusted so that the sintered first microporous layer would have an areal weight of 32 g/m², and that the first microporous layer had a thickness of 50 µm in Example 1.

### (Example 7)

A gas diffusion electrode was obtained in the same manner as in Example 1 except that the application amount of the second microporous layer coating solution was adjusted so that the second microporous layer would have a thickness of 10 µm in Example 1.

### (Example 8)

A gas diffusion electrode was obtained by applying a first microporous layer coating solution to a film with a die coater, and successively applying a second microporous layer coating solution to the first microporous layer with a die coater. The moisture was dried at 100°C, and the laminate was sintered at 350°C and removed from the film to give a gas diffusion electrode.

The microporous layer coating solutions were prepared in the following manner.

First microporous layer coating solution:
The coating solution was prepared by kneading 7.1 parts by mass of carbon black, 3.0 parts by mass of a PTFE dispersion, 14.2 parts by mass of a surfactant, and 75.7 parts by mass of purified water with a planetary mixer.

Second microporous layer coating solution:
The coating solution was prepared by kneading 7.1 parts by mass of VGCF, 14.2 parts by mass of a surfactant, and 78.7 parts by mass of purified water with a planetary mixer. The kneading time in the planetary mixer was increased to twice as long as that for the first microporous layer coating solution to increase the degree of dispersion of the coating solution.

At the time of application of the first microporous layer coating solution, the application amount was adjusted so that the sintered microporous layer would have an areal weight of 16 g/m². The first microporous layer had a thickness of 25 µm. Moreover, at the time of application of the second microporous layer coating solution, the application amount was adjusted so that the second microporous layer would have a thickness of 3 µm.

As a result of this example, the gas diffusion electrode was poor in the spring property. Other measurement results are as shown in Table 1. It was found that a gas diffusion electrode formed only with a microporous layer is poor in the spring property but exhibits good performance in other items.

### (Comparative Example 1)

A gas diffusion electrode was obtained in the same manner as in Example 1 except that the amount of the PTFE dispersion in the second microporous layer coating solution was changed to 2.4 parts by mass, and the amount of the purified water therein was changed to 76.3 parts by mass in Example 1. In this example, the catalyst layer and the microporous layer did not adhere to each other. Other measurement results are as shown in Table 2.

### (Comparative Example 2)

A gas diffusion electrode was obtained in the same manner as in Example 1 except that the first microporous layer coating solution was once applied to a film with a die coater, the moisture was dried at 100°C to form a first microporous layer, then the first microporous layer was pressure-welded to a conductive porous substrate, the film was removed to form the first microporous layer on the conductive porous substrate, then the second microporous layer coating solution was applied to the first microporous layer with a die coater, the moisture was dried at 100°C, and sintering was performed at 350°C. As a result of evaluating the power generation performance of the gas diffusion electrode, as shown in Table 2, the output voltage was 0.31 V (operation temperature 57°C, humidification temperature 57°C, current density 1.9 A/cm²), and the gas diffusion electrode was slightly poor in anti-flooding property. Other measurement results are as shown in Table 2.

### (Comparative Example 3)

A gas diffusion electrode was obtained in the same manner as in Example 1 except that the amount of the PTFE dispersion in the first microporous layer coating solution was changed to 11.8 parts by mass, and the amount of the purified water therein was changed to 66.9 parts by mass in Example 1. As a result of evaluating the power generation performance of the gas diffusion electrode, as shown in Table 2, the gas diffusibility in the through-plane direction was as low as 28%. Other measurement results are as shown in Table 2.

### (Comparative Example 4)

A gas diffusion electrode was obtained in the same manner as in Example 6 except that the amount of the purified water in the second microporous layer coating solution was changed to 76.3 parts by mass, and 2.4 parts by mass of the PTFE dispersion was added to the second microporous layer coating solution in Example 6.

As a result of this example, the gas diffusion electrode was poor in the spring property. Other measurement results are as shown in Table 2. It was found that a gas diffusion electrode formed only with a microporous layer is poor in the spring property but exhibits good performance in other items.

**[Table 1]**

| | unit | Example 1 | Example 2 | Example 3 | Example 4 | Example 5 | Example 6 | Example 7 | Example 8 |
|---|---|---|---|---|---|---|---|---|---|
| Conductive porous substrate | - | Formed | Formed | Formed | Formed | Formed | Formed | Formed | Not formed |
| Type of conductive fine particles contained in first microporous layer | - | Carbon black | Carbon black | Carbon black | Carbon black | Carbon black | Carbon black | Carbon black | Carbon black |
| Type of conductive material having linear portion contained in second microporous layer | - | VGCF | VGCF | VGCF | VGCF | VGCF | VGCF | VGCF | VGCF |
| Cross-sectional F/C ratio of first microporous layer | - | 0.18 | 0.18 | 0.14 | 0.09 | 0.26 | 0.18 | 0.18 | 0.14 |
| Cross-sectional F/C ratio of microporous layer 1-1 | - | 0.16 | 0.16 | 0.12 | 0.08 | 0.23 | 0.16 | 0.16 | 0.12 |
| Cross-sectional F/C ratio of microporous layer 1-2 | - | 0.20 | 0.20 | 0.16 | 0.10 | 0.29 | 0.20 | 0.20 | 0.16 |
| Cross-sectional F/C ratio of second microporous layer | - | 0.03 | 0.00 | 0.00 | 0.00 | 0.00 | 0.03 | 0.03 | 0.00 |
| Thickness of first microporous layer | [µm] | 25 | 25 | 25 | 25 | 25 | 50 | 25 | 25 |
| Thickness of second microporous layer | [µm] | 3 | 3 | 3 | 3 | 3 | 3 | 10 | 3 |
| Gas diffusibility in through-plane direction | [%] | 32 | 33 | 33 | 34 | 31 | 29 | 30 | 41 |
| Electric resistance in through-plane direction | [mΩcm²] | 3.6 | 3.2 | 3.2 | 3.1 | 3.8 | 4.1 | 3.6 | 2.5 |
| Adhesion between catalyst layer and microporous layer | - | ○ | ○ | ○ | ○ | ○ | ○ | ○ | ○ |
| Power generation performance | [V@1.9A/cm²] | 0.41 | 0.43 | 0.46 | 0.44 | 0.41 | 0.38 | 0.36 | 0.48 |
| Spring property | [%] | 86 | 85 | 85 | 85 | 87 | 89 | 86 | 98 |

**[Table 2]**

| | unit | Comparative Example 1 | Comparative Example 2 | Comparative Example 3 | Comparative Example 4 |
|---|---|---|---|---|---|
| Conductive porous substrate | - | Formed | Formed | Formed | Not formed |
| Type of conductive fine particles contained in first microporous layer | - | Carbon black | Carbon black | Carbon black | Carbon black |
| Type of conductive material having linear portion contained in second microporous layer | - | VGCF | VGCF | VGCF | VGCF |
| Cross-sectional F/C ratio of first microporous layer | - | 0.18 | 0.18 | 0.45 | 0.14 |
| Cross-sectional F/C ratio of microporous layer 1-1 | - | 0.16 | 0.20 | 0.40 | 0.12 |
| Cross-sectional F/C ratio of microporous layer 1-2 | - | 0.20 | 0.16 | 0.50 | 0.16 |
| Cross-sectional F/C ratio of second microporous layer | - | 0.11 | 0.03 | 0.03 | 0.11 |
| Thickness of first microporous layer | [µm] | 25 | 25 | 25 | 25 |
| Thickness of second microporous layer | [µm] | 3 | 3 | 3 | 3 |
| Gas diffusibility in through-plane direction | [%] | 32 | 32 | 28 | 40 |
| Electric resistance in through-plane direction | [mΩcm²] | 4.4 | 3.8 | 3.9 | 2.6 |
| Adhesion between catalyst layer and microporous layer | - | × | ○ | ○ | × |
| Power generation performance | [V@1.9A/cm²] | 0.41 | 0.31 | 0.28 | 0.47 |
| Spring property | [%] | 86 | 86 | 87 | 99 |

### DESCRIPTION OF REFERENCE SIGNS

101: Electrolyte membrane
102: Catalyst layer
103: Gas diffusion layer
104: Separator
2: Conductive porous substrate
200: Second microporous layer
201: First microporous layer
202: Thickness of second microporous layer
203: Thickness of first microporous layer

## Claims

1. A gas diffusion electrode having a microporous layer,
wherein the microporous layer has at least a first microporous layer and a second microporous layer,
the first microporous layer has a cross-sectional F/C ratio of 0.06 or more and 0.33 or less,
the second microporous layer has a cross-sectional F/C ratio less than 0.06, and
where the first microporous layer is equally divided into a part not in contact with the second microporous layer and a part in contact with the second microporous layer, in the equally divided first microporous layer, the part not in contact with the second microporous layer is referred to as a microporous layer 1-1, the part in contact with the second microporous layer is referred to as a microporous layer 1-2, and the microporous layer 1-1 has a cross-sectional F/C ratio smaller than that of the microporous layer 1-2,
wherein "F" is a mass of fluorine atoms, "C" is a mass of carbon atoms, and the "cross-sectional F/C ratio" is a value of "mass of fluorine atoms"/"mass of carbon atoms" as measured in a cross-sectional direction.

2. The gas diffusion electrode according to claim 1, wherein the first microporous layer has a cross-sectional F/C ratio of 0.08 or more and 0.20 or less, and
the second microporous layer has a cross-sectional F/C ratio less than 0.03.

3. The gas diffusion electrode according to claim 1 or 2, wherein the first microporous layer has a thickness of 9.9 µm or more and less than 50 µm, and
the second microporous layer has a thickness of 0.1 µm or more and less than 10 µm.

4. The gas diffusion electrode according to any one of claims 1 to 3, having a gas diffusibility in a through-plane direction of 30% or more.

5. The gas diffusion electrode according to any one of claims 1 to 4, having, when pressurized at 2.4 MPa, an electric resistance in a through-plane direction of 4.0 mΩcm² or less.

6. The gas diffusion electrode according to any one of claims 1 to 5, wherein the second microporous layer contains a conductive material having a linear portion.

7. The gas diffusion electrode according to claim 6, wherein the conductive material having a linear portion has a linear portion having an aspect ratio of 30 or more and 5000 or less.

8. The gas diffusion electrode according to claim 6 or 7, wherein the conductive material having a linear portion is linear carbon.

9. The gas diffusion electrode according to any one of claims 1 to 8, wherein the first microporous layer contains conductive fine particles.

10. The gas diffusion electrode according to any one of claims 1 to 9, comprising a conductive porous substrate and the microporous layer on at least one surface of the conductive porous substrate, and
having the first microporous layer on at least one surface of the conductive porous substrate.

11. A method for producing the gas diffusion electrode according to claim 10, comprising the steps of:
applying a coating solution for forming the first microporous layer to one surface of the conductive porous substrate, and then
applying a coating solution for forming the second microporous layer to the first microporous layer.
